# EUROPEAN PATENT APPLICATION

(11) **EP 1 511 303 A2**
(43) Date of publication of application: **02.03.2005**
(21) Application number: 04255072.3
(22) Date of filing: 24.08.2004
(51) Int. Cl.: H04N 5/445

(54) **Method and apparatus for scheduling digital TV programs**

(30) Priority: 26.08.2003 KR 2003059218
(71) Applicant: Samsung Electronics Co., Ltd., Suwon-city, Kyungki-do (KR)
(72) Inventor: Lee, Hye-Soo, Seocho-gu Seoul (KR)
(74) Representative: Waddington, Richard

(57) **Abstract**

A method and apparatus for scheduling digital TV programs are provided. In the method of scheduling digital TV programs, if a user sets a timer preprogramming or reminder function on a segment basis using segment metadata of a program to be broadcast, the timer preprogramming or reminder function is performed when the broadcast time of the at least one selected segment is reached. The apparatus includes an input stream management unit, which obtains TV program schedule information and segment information from a digital TV broadcast stream and transmits the TV program schedule information and the segment information to a segment database (50), and a schedule management unit (70), which manages a schedule of a digital TV program, including timer preprogramming and reminder function, in response to a user's timer preprogramming command. The user can timer preprogram a desired digital TV program on a segment basis without help from an external server. In addition, the user can view the desired digital TV program exactly on a segment basis without missing any part of the program and without help from an external server. Moreover, a memory space of a storage device can be efficiently reserved by timer preprogramming only a desired portion of the digital TV program.

## Description

The present invention relates to a method and apparatus for scheduling digital TV programs, and more particularly, to a method and apparatus for scheduling digital TV programs, which includes a timer preprogramming feature of a digital TV program of interest on a segment basis, or a reminder function of notifying a user of a start time of the digital TV program.

In a digital TV environment, several tens to several hundreds of channels of programming are presented at any time of the day, and users are provided with electronic program guide (EPG) containing information on the digital TV programs together with broadcast signals. The users can obtain detailed information on a particular TV program through the EPG, or can retrieve information on a plurality of programs by channel or broadcast time through channel tuning. In addition, the user can schedule digital TV programs by timer preprogramming a digital TV for the TV programs that he/she wishes to watch or setting a reminder function to the digital TV using the EPG.

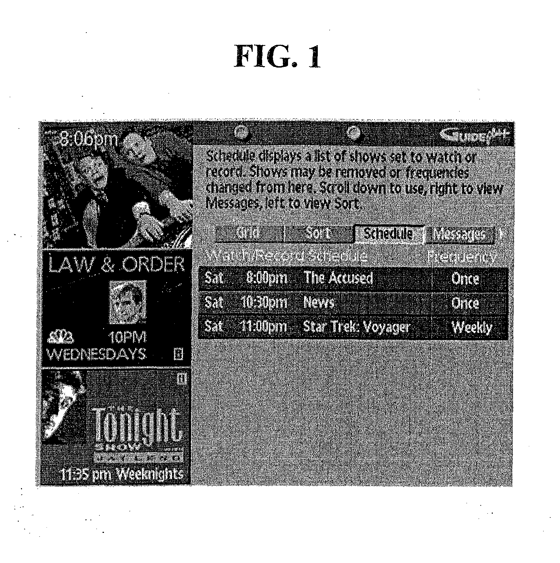

Figure 1 illustrates an exemplary screen of a conventional scheduling list.

In the scheduling using EPG, after checking broadcast time information and channel information of digital TV programs of interest, a user timer preprograms a desired program or sets a reminder function of notifying the user of a broadcast time of the desired program. Figure 1 shows a screen of program listings scheduled by the user's selection. The scheduling method illustrated in Figure 1, however, can only schedule digital TV programs on a program-by-program basis. In other words, the conventional digital TV program scheduling method shown in Figure 1 has a limitation in view of effectiveness because it does not allow the user to schedule a particular portion of a program.

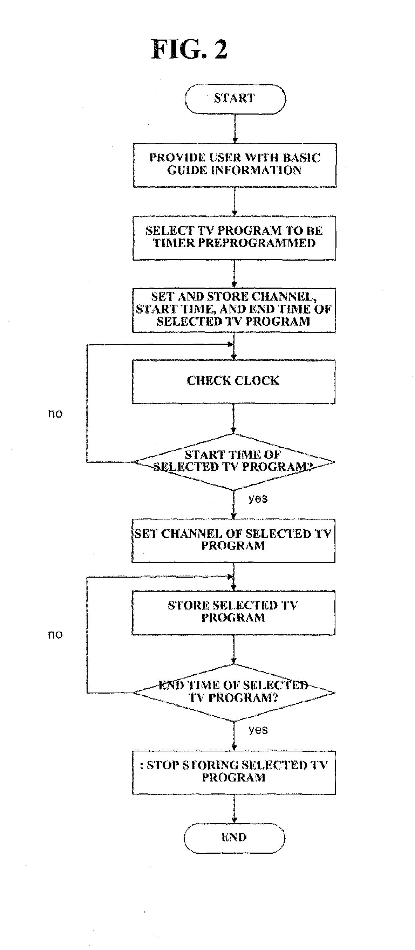

Figure 2 is a flowchart of selectively reproducing a conventional TV program, as disclosed in Korean Patent Application No. 2003-014993. In the disclosed method, a user selects a TV program to be recorded and transmits information on the selected TV program to an external server. Then, the external server receives exact start and end time data of the selected TV program while monitoring broadcast programs. A storage device records the selected TV program based on the exact time data received from the external server.

However, since the conventional method requires intervention of the external server all the time, a timer preprogramming or reminder function may not be properly performed in a case where the Internet service is not available for some reason. Therefore, a need exists for a scheduling method and apparatus which can selectively record a TV program or perform a reminder function of notifying a user of a broadcast time of a desired broadcast program without help from an external server.

According to one aspect of the present invention there is provided a method and apparatus for scheduling digital TV programs, which can schedule digital TV programs on a segment basis without help from an external server.

In one aspect of the present invention, there is provided a method of scheduling digital TV programs, comprising receiving meta-data including segment schedule information in units of segments of a digital TV program, preprogramming for a predetermined operation to be performed at a broadcast time of at least one segment of the digital TV program selected using the meta-data, and performing the preprogrammed operation when the broadcast time of the at least one selected segment is reached.

The preprogrammed operation is preferably a recording or a reminder function that notifies a user that the at least one selected segment is about to start. The reminder function may include displaying a reminder message to allow the user to be reminded in a video manner that the current time is the broadcast time of the at least one selected segment. Also, the reminder function may include notifying the user through a speaker to allow the user to be reminded in an audio manner that the current time is the broadcast time of the at least one selected segment. Even when the reminder function is set, the method may further include the recording of the at least one selected segment.

In another aspect of the present invention, there is provided an apparatus for scheduling digital TV programs, comprising an input stream management unit, which obtains TV program schedule information and segment information from a digital TV broadcast stream and transmits the TV program schedule information and the segment information to a segment database, and a schedule management unit, which manages a schedule of predetermined segments of a digital TV program according to a control signal generated from a controller in response to a user's timer preprogramming command for the predetermined segments using the TV program schedule information and the segment information stored in the segment database, and transmits information on the timer preprogramming command to the controller to enable the preprogrammed operation to be performed when the start time of the predetermined segment is reached.

The input stream management unit comprises a stream manager, which separates audio, video and data from the digital TV broadcast stream, synchronizes them with one another, and transmits them to either a content database or a display unit, and extracts TV program schedule information and segment information of the digital TV program from the digital TV broadcast stream, and a meta-data handler, which receives the digital TV program information and the segment information from the stream manager and parses the same. The meta-data handler may comprise a PSI/PSIP parser, which parses a PSI section and a PSIP table of an MPEG-2 transport stream, and an XML parser, which parses segment meta-data described in XML.

Preferably, the timer preprogramming command transmitted from the schedule manager to the controller is recording information or a reminder for a broadcast time of the at least one selected segment.

For a better understanding of the invention, and to show how embodiments of the same may be carried into effect, reference will now be made, by way of example, to the accompanying diagrammatic drawings in which:
Figure 1 illustrates an exemplary screen of a conventional scheduling list;
Figure 2 is a flowchart of a conventional method of selectively reproducing a TV program;
Figure 3 is a flowchart of a method of scheduling digital TV programs on a segment basis according to an exemplary embodiment of the present invention;
Figures 4A through 4C illustrate examples of scheduling of different digital TV programs on a segment basis according to the present invention; and
Figure 5 is a block diagram of an apparatus for scheduling digital TV programs on a segment basis according to the present invention.

An exemplary embodiment of the present invention will now be described with reference to the accompanying drawings.

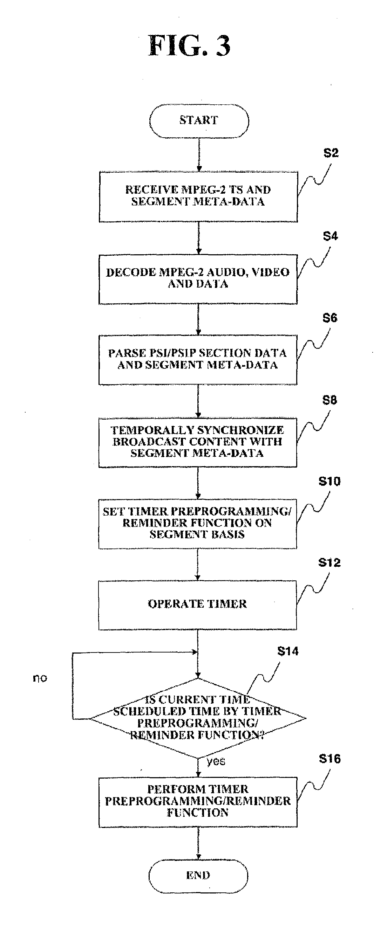

Figure 3 is a flowchart of a method of scheduling digital TV programs on a segment basis according to an exemplary embodiment of the present invention.

First, in step S2, a set-top box receives a data stream including a digital TV programming content and segment meta-data including information on segments of the digital TV program. Currently, the digital TV programming content is typically transmitted using a MPEG-2 transport stream (TS) technique, and schedules for TV programs to be broadcast for about two weeks are also presented together with contents thereof. The data stream received by the set-top box is demultiplexed, or demultiplexed and tuned depending on whether it is a cable broadcast data stream, a terrestrial wave broadcast data stream, or a satellite broadcast data stream. Then, the processed data stream is categorized into MPEG-2 audio, video and data streams, constituting a digital TV program together. The term segment refers to a unit of consecutive durations forming a program. Segment meta-data refers to a description of segments forming a broadcast program. TV-Anytime meta-data, for example, can be defined as segment meta-data in <SegmentInformation>, including title of a segment, synopsis, start time and duration of the segment, start time of a key frame of the segment, group to which the segment belongs, and the like. The content described as segment group meta-data may include segment grouping, that is, event-oriented segment group or object-oriented segment group. For example, the following are used to define segment grouping: highlights, highlights/events, highlights/objects, bookmarks, theme groups, preview, table of contents. In the present invention, details of a user's desired program can be timer preprogrammed or a reminder function can be set using the segment meta-data and the segment group meta-data.

After the set-top box receives the segment meta-data and the data stream, MPEG-2 audio, video and data streams are decoded in step S4. As a result of the decoding, PSI (Program Specific Information)/PSIP (Program Service Integration Protocol) data can be obtained. In a case where the segment meta-data has been transmitted to the set-top box over an MPEG-2 TS, it can be obtained by a data decoding process, which, however, is only an exemplary embodiment of the present invention, so the scope of the present invention is not restricted thereto. In other words, according to another feature of the present invention, the segment meta-data can also be independently transmitted over the Internet.

In step S6, the PSI/PSIP data and the segment meta-data are parsed. The parsing of the segment metal-data is performed for the purpose of interpreting segment information contained in the segment meta-data. The parsing of the PSI/PSIP data is performed for the purpose of detecting time data of a global positioning system (GPS) in a system time table (STT) of a PSIP table and synchronizing the detected time data with time data of a program clock reference (PCR) of the MPEG-2 video. That is, the parsed PSI/PSIP can be used to synchronize data such as content or caption. The time data can also be used for scheduling the content with the segment meta-data.

In step S8, temporal synchronization of the broadcast content and the segment meta-data is performed using the time data obtained in step S6. The term synchronization refers to a technique of temporally synchronizing broadcast content received independently by the set-top box with the segment meta-data. Once the broadcast content, i.e., data stream, is synchronized with the segment meta-data, the user may optionally timer preprogram a digital TV to record a TV program on a segment basis, or may set a reminder function so that he/she can be notified of the starting of each segment of the TV program, using the segment meta-data.

After step S8, the user timer preprograms the digital TV to record a digital TV program on a segment basis or sets the reminder function using schedule information of TV programs in step S10. Here, the schedule information of TV programs includes information on the TV programs to be aired and information on segments of the respective TV programs. The schedule information is preferably provided to the user through a convenient user interface, such as, EPG.

After step S10, a timer incorporated into the set-top box operates at a time when a data stream corresponding to a desired segment of a digital TV program is to be transmitted in step S12.

In step S14, it is determined using the timer whether the current time is the time scheduled for the program on which timer preprogramming is performed or for which the user has set a reminder function. If the current time is the scheduled time, recording of the data stream corresponding to the desired segment of the digital TV program is performed, or the reminder message is presented immediately, e.g., 5 minutes, before the segment of the program of interest is to start, through a screen or speaker of the digital TV, in step S16. Meanwhile, in a case where the user has set a reminder function but the digital TV is OFF at a start time of the desired segment of the digital TV program, it is preferable to record the desired segment of the digital TV program at the time when the user is reminded of the start of the segment.

Segment meta-data on a digital TV program that the set-top box receives may be transmitted in the following manner. A broadcast station produces a program stream, creates segment meta-data on the program stream, and transmits the segment meta-data together with the program stream. In this case, the segment meta-data is inserted into a predetermined area of an MPEG-2 TS stream and then transmitted to a user. Then, the user's set-top box can present a list of segments comprising each digital TV program to the user by parsing the segment meta-data inserted into the MPEG-2 TS stream. Alternatively, the broadcast station transmits the program stream to both the user and the segment meta-data provider, and then the segment meta-data provider produces the segment meta-data on the received program stream. In this case, content should be provided to the segment meta-data provider before providing the same to the user. The segment meta-data provider transmits the segment meta-data to the broadcast station, and the broadcast station transmits the segment meta-data to the user. Alternatively, the segment meta-data on the program stream is stored in a web server, and the set-top box receives the segment meta-data from the web server.

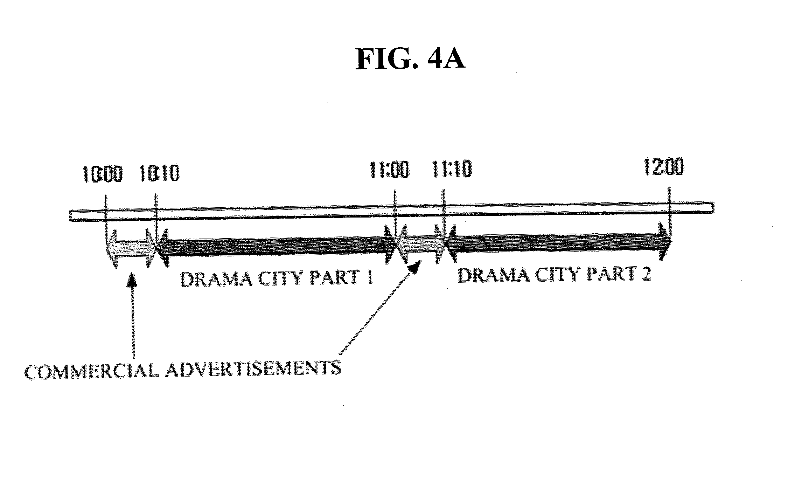

Examples of lists of segments of a digital TV program scheduled according to the present invention will now be described in greater detail with reference to Figures 4A through 4C.

Figures 4A through 4C illustrate examples of scheduling segments of different digital TV programs according to the present invention.

More specifically, Figure 4A illustrates a schedule of segments of a TV drama program. The TV drama may be discontinuously broadcasted because it comprises parts 1 and 2, or because a series of Commercial advertisements may be presented in the middle of broadcasting the drama.

However, a user may want to view only his/her favorite TV program, e.g., dramas, without any discontinuity by, for example, skipping the series of Commercial advertisements. In this case, the user is capable of timer preprogramming the digital TV for a TV drama with the series of Commercial advertisements skipped using segment information of the TV drama. In addition, for real-time viewing an in-progress drama at the same time when the drama is broadcasted, he/she can be notified that the TV drama is about to start immediately before the TV drama is broadcast. In other words, the user may change channels to watch another program of a predetermined channel with commercial advertisements skipped, i.e., for ten minutes from 10:00 to 10:10. Shortly before 10:10, a reminder message indicating that the TV drama is about to start is displayed on the screen of a digital TV. Then, the user selects the previous channel corresponding to the TV drama to view part 1 of the TV drama. Part 1 of the TV drama is over at 11:00, and another commercial break starts. Then, the user may change channels for viewing of another TV program during the commercial break. Shortly before 11:10, a message indicating that part 2 of the TV drama is about to start is displayed on the screen of the digital TV set, and then the user changes channels again shortly before resumption of the previously watched channel for viewing of part 2 of the TV drama. The above-described reminder function may also be effectuated through a speaker of the digital TV, rather than through the screen of the digital TV.

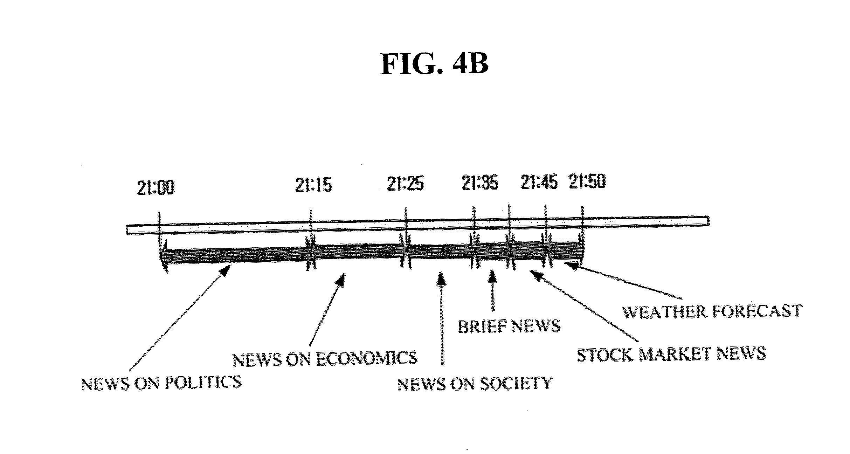

Figure 4B illustrates an example of scheduling segments of a news program. If segment meta-data of the news program contains information on genres of segments of the news program, a user may view only desired genres of segments of the news program through a segment scheduling process. More specifically, in a case where the news program comprises news on politics, news on economics, news on society, brief news, stock market news, and weather forecast, the user may timer preprogram or selectively view whatever he/she desires to view using the segment meta-data of the news program. In other words, if the user desires to watch only the economics news, the stock market news, and the weather forecast, the user can timer preprogram his/her desired news genres only, or set a reminder function so that the user can be notified of the starting of each of his/her desired news genres, using the segment meta-data of the news program.

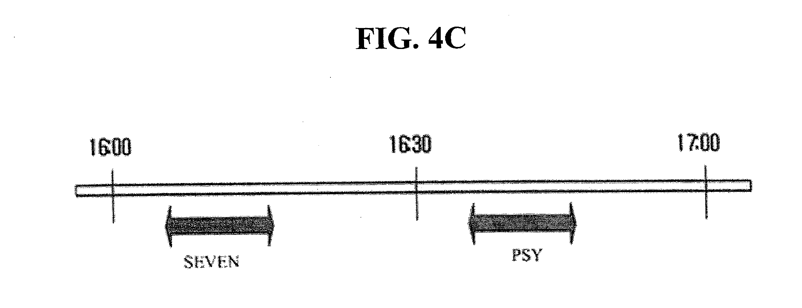

Figure 4C illustrates an example of scheduling segments of a music program, in which segments can be categorized by singer. A user may timer preprogram or set a reminder function for only segments of the music program, in which his/her favourite singers appear, so that he/she can view only the segments of the music program. As shown in Figure 4C, the user can identify which parts of the music program respectively feature Korean singers 'Seven' and 'Psy' using segment meta-data of the music program.

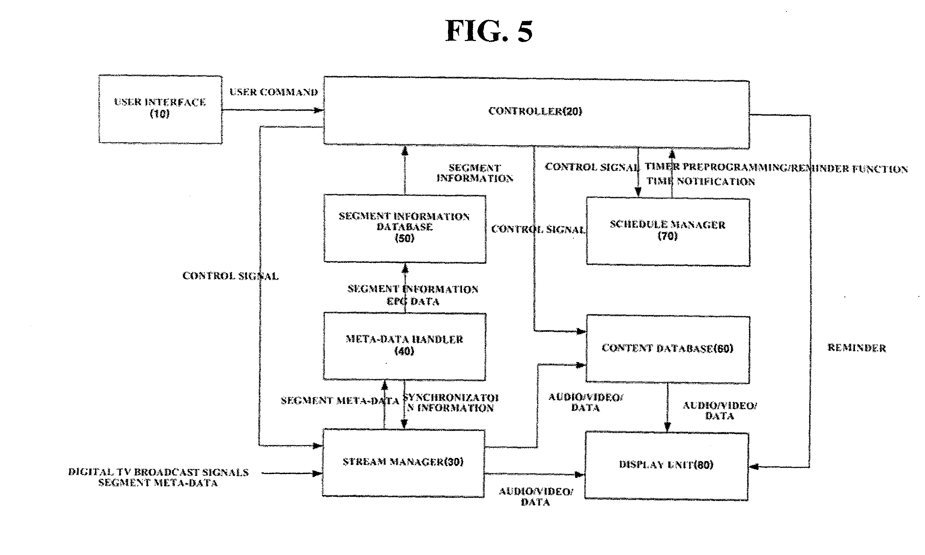

Figure 5 is a block diagram of an apparatus for scheduling digital TV programs on a segment basis according to an exemplary embodiment of the present invention. It is assumed that the apparatus for scheduling segments of a digital TV program according to the preferred embodiment of the present invention receives and processes an MPEG-2 TS and segment meta-data satisfies TV-Anytime formats.

A user interface 10 receives a user command. The user interface 10 may be embodied as a remote controller, a menu button equipped with a digital TV set, or an on-screen display (OSD). A controller 20 processes the user command received by the user interface 10. A stream manager 30 processes a digital TV broadcast stream received from a broadcast station. In the present embodiment, segment meta-data on digital TV programs is contained in the digital TV broadcast stream. The stream manager 30 separates audio, video and data from the digital TV broadcast stream and decodes the same. The stream manager 30 transmits PSI/PSIP section data and the segment meta-data, which are obtained by decoding the audio, video, and data, to a meta-data handler 40. The meta-data handler 40 parses PSI/PSIP sections or a PSIP table, thereby obtaining schedule information on the digital TV programs. Since the segment meta-data that satisfies the TV-Anytime specifications is described in XML, the segment meta-data is XML-parsed, thereby obtaining segment information of each of the digital TV programs. The segment information of each of the digital TV programs and the schedule information of the digital TV programs are all stored in a segment information database 50. The audio, video, and data are stored in a content database 60 or are transmitted to a display unit 80. A schedule manager 70 schedules segments of each of the digital TV programs in response to the user command received by the user interface 10. Processes of timer preprogramming and setting a reminder function on a segment basis will now be described.

The timer preprogramming process is first described. A user selects one or more segments of any desired one of the digital TV programs using the schedule information and segment information of the digital TV programs stored in the segment information database 50. When the user presses a 'record' button using the user interface 10, a timer preprogramming command is transmitted to the controller 20. The controller 20 transmits the timer preprogramming command to the schedule manager 70 together with information on the selected segment(s), such as the start time and duration of the selected segment(s). The schedule manager 70 calculates how much time is left until the selected segment(s) starts. The stream manager 30 separates audio, video and data from the digital TV broadcast stream, i.e., an MPEG-2 TS, synchronizes them with one another, and temporarily stores a portion of the synchronized result corresponding to a predetermined duration of time, e.g., 30 minutes, in the content database 60. If no command has been received from the controller 20, the stream manager 30 deletes the audio, video and data temporarily stored in the content database 60. If the timer preprogramming command has been received from the controller 20, the stream manager 30a stores the audio, video and data temporarily stored in the content database 60. When the current time is a time scheduled by the timer preprogramming, the schedule manager 70 notifies the controller 20 that it is time to perform timer preprogramming. The controller 20 transmits a control signal to the stream manager 30 so that the stream manager 30 can select a desired channel to be timer preprogrammed. In addition, the controller 20 transmits another control signal including a record command to the content database 60 so that the content database 60 can store the audio, video and data received from the stream manager 30 in response to the record command.

Next, the process of setting a reminder function will be described. The user selects one or more segments of any desired one of the digital TV programs using the schedule information and segment information of the digital TV programs stored in the segment information database 50. When the user presses a 'reminder function' button using the user interface 10, a reminder function command is transmitted to the controller 20. The controller 20 transmits the reminder function command to the schedule manager 70 together with information on the starting of the selected segment(s). The schedule manager 70 calculates how much time is left until the selected segment(s) are aired. Shortly before the selected segment(s) are aired, the schedule manager 70 notifies the controller 20 that the selected segment(s) are about to start, and the controller 20 notifies the display unit 80 that the selected segment(s) are about to start. If the display unit 80 is turned off, the controller 20 issues a record command to the content database 60 so that the content database 60 can store the selected segment(s) in response to the record command. The user may be notified that the selected segment(s) are about to start, through a speaker (not shown) as well as the display unit 80.

In concluding the detailed description, those skilled in the art will appreciate that many variations and modifications can be made to the preferred embodiments without substantially departing from the principles of the present invention. For example, while the present invention has been described wherein a segment information database and a content database are separately provided in the apparatus for scheduling segments of a digital TV program, the segment information database and the content database may be integrated into a single database. Therefore, the disclosed exemplary embodiments of the invention are used in a generic and descriptive sense only and not for purposes of limitation. It is intended to cover by the appended claims all such alterations and modifications as fall within the scope of the claims and equivalents thereof.

According to the present invention, a user can timer preprogram each segment of a digital TV program of interest without help from an external server. In addition, according to the present invention, a memory space of a storage device can be efficiently reserved by timer preprogramming only a desired portion of the digital TV program. Moreover, the user can view the digital TV program of interest on a segment basis without help from an external server.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of scheduling digital TV programs, comprising:
receiving meta-data including segment schedule information in units of segments of a digital TV program;
preprogramming for a predetermined operation to be performed at a broadcast time of at least one segment of the digital TV program selected using the meta-data; and
performing the preprogrammed operation when the broadcast time of the at least one selected segment is reached.

2. The method of claim 1, wherein the preprogrammed operation is recording.

3. The method of claim 1 or claim 2, wherein the preprogrammed operation is a reminder function that notifies a user that the at least one selected segment is about to start.

4. The method of claim 3, wherein the reminder function includes displaying a reminder message in a video manner to allow the user to be reminded that the current time is the broadcast time of the at least one selected segment.

5. The method of claim 3 or claim 4, wherein the reminder function includes notifying the user in an audio manner through a speaker that the current time is the broadcast time of the at least one selected segment.

6. The method of any one of claims 3 to 5, further comprising recording the at least one selected segment.

7. An apparatus for scheduling digital TV programs, comprising:
an input stream management unit, which obtains TV program schedule information and segment information from a digital TV broadcast stream and transmits the TV program schedule information and the segment information to a segment database (50); and
a schedule management unit (70), which manages a schedule of predetermined segments of a digital TV program according to a control signal generated from a controller (20) in response to a user's timer preprogramming command for the predetermined segments using the TV program schedule information and the segment information stored in the segment database (50), and transmits information on the timer preprogramming command to the controller (20) to enable the preprogrammed operation to be performed when the start time of the predetermined segments is reached.

8. The apparatus of claim 7, wherein the input stream management unit comprises:
a stream manager (30), which separates audio, video and data from the digital TV broadcast stream, synchronizes them with one another, and transmits them to either a content database (60) or a display unit (80), and extracts TV program schedule information and segment information of the digital TV program from the digital TV broadcast stream; and
a meta-data handler (40), which receives the digital TV program information and the segment information from the stream manager (30) and parses the same.

9. The apparatus of claim 8, wherein the meta-data handler (40) comprises a PSI/PSIP parser, which parses a PSI section and a PSIP table of an MPEG-2 transport stream, and an XML parser, which parses segment meta-data described in XML.

10. The apparatus of any one of claims 7 to 9, wherein the timer preprogramming command transmitted from the schedule manager (30) to the controller is recording information.

11. The apparatus of any one of claims 7 to 10, wherein the timer preprogramming command transmitted from the schedule manager (30) to the controller (20) is a broadcast time of the at least one selected segment.
